# EUROPÄISCHE PATENTSCHRIFT

(11) **EP 0 686 685 B1**
(45) Veröffentlichungstag und Bekanntmachung des Hinweises auf die Patenterteilung: **02.12.1998**
(21) Anmeldenummer: 95109016.6
(22) Anmeldetag: 12.06.1995
(51) Int. Cl.: C09K 9/02

(54) **Photochrome Farbstoffe**
Photochromic dye
Colorant photochromique

(30) Priorität: 10.06.1994 DE 4420378
(43) Veröffentlichungstag der Anmeldung: 13.12.1995
(73) Patentinhaber: Optische Werke G. Rodenstock, 80469 München (DE)
(72) Erfinder: Melzig, Manfred, Dr., D-82234 Wessling (DE); Zinner, Herbert, Dr., D-82024 Taufkirchen (DE)
(74) Vertreter: Münich, Wilhelm, Dr.

(56) Entgegenhaltungen:
- EP-A- 0 316 980
- DATABASE WPI Section Ch, Week 9316 Derwent Publications Ltd., London, GB; Class A14, AN 93-129249 & JP-A-05 065 477 ( TORAY IND INC) , 19.März 1993
- DATABASE WPI Section Ch, Week 9313 Derwent Publications Ltd., London, GB; Class A89, AN 93-104523 & JP-A-05 043 870 ( TORAY IND INC) , 23.Februar 1993

## Beschreibung

Die Erfindung bezieht sich auf photochrome Farbstoffe zur Einfärbung von transparenten Gegenständen aus einem Kunststoffmaterial und insbesondere von Kunststoff-Brillengläsern.

Photochrome Farbstoffe für Kunststoff-Brillengläser sind aus der Patentliteratur seit langem bekannt. Seit einiger Zeit sind auch photochrom eingefärbte Kunststoff-Brillengläser erhältlich.

Damit diese Brillengläser im eingefärbten Zustand die von den meisten Brillenträgern bevorzugte neutrale graue bis braune Farbe aufweisen, ist es erforderlich, mehrere photochrome Farbstoffe einzusetzen, die spektral unterschiedlich absorbieren. In der Regel sind hierzu Farbstoffe aus wenigstens zwei unterschiedlichen Farbstoffklassen erforderlich. Beispielsweise sind Brillengläser, die im eingedunkelten Zustand eine neutral graue bis braune Farbe aufweisen, (u.a.) mit Spiro-(indolino)pyridobenzooxazinen, wie sie in der EP-A 141 407 oder der EP-A 232 295 beschrieben sind, und Spiro(indolino)benzooxazinen, wie sie in der US-PS 4 816 584 beschrieben sind, oder Diarylnaphthopyranen eingefärbt, wie sie in der US-PS 5 238 981 oder der US-PS 5 066 818 beschrieben sind.

Bei der Einfärbung photochromer Gegenstände aus einem Kunststoffmaterial sind zwei "Hauptverfahren" bekannt:
Bei dem einen Verfahren werden der oder die photochromen Farbstoffe dem Monomer vor der Polymerisation zugesetzt, das fertige Brillenglas ist also "quasi homogen" eingefärbt. Bei dem zweiten Verfahren erfolgt eine nachträgliche Färbung des Gegenstands von einer oder mehreren Oberflächen her. Von dem zweiten "Hauptverfahren" sind wiederum die verschiedensten Variationen bekannt:
So ist in der US-PS 4 043 637 ein Verfahren beschrieben, bei dem der bzw. die photochromen Farbstoffe in eine Lösung eingerührt werden, in die das einzufärbende Brillenglas eingetaucht wird.

Bei dem in der US-PS 4 286 957 beschriebenen Verfahren wird ein Träger, beispielsweise Kraftpapier verwendet, der auf das Kunststoffmaterial aufgelegt wird. Bei Erwärmung sublimiert der Farbstoff und dringt in die Matrix des Kunststoff-Brillenglases ein. Ein dem in der US-PS 4 286 957 beschriebenen Verfahren ähnliches Verfahren ist ferner in der US-PS 4 880 667 beschrieben.

Bei dem in der DE-A 35 16 568 beschriebenen Verfahren wird auf eine oder beide Oberflächen des Brillenglases ein Lack aufgebracht, in dem der oder die photochromen Farbstoffe enthalten sind. Aus dem Lack diffundieren dann die Farbstoffmoleküle in die Oberflächenschicht des Brillenglases ein.

All diesen Verfahren ist jedoch gemeinsam, daß sie zur Beschleunigung des Einfärbevorgangs bei höheren Temperaturen als Raumtemperatur arbeiten. Erfindungsgemäß ist nun erkannt worden, daß es immer dann, wenn ein Gegenstand aus einem Kunststoffmaterial mit Farbstoffen eingefärbt ist, die mehr als einer Farbstoffklasse angehören, schwierig ist, den Gegenstand homogen einzufärben. Dieses Problem wird - wie ebenfalls erfindungsgemäß festgestellt worden ist - durch die unterschiedliche Diffusions- bzw. Migrationsgeschwindigkeit der unterschiedlich aufgebauten Farbstoffmoleküle hervorgerufen.

Dies soll im folgenden erläutert werden:
Häufig besitzen Substanzen, wie beispielsweise Spiro-(indolinobenzoxazine) oder Diaryl-2H-naphthopyrane, die im nicht angeregten Zustand UV-Licht mit einer Wellenlänge absorbieren, die kürzer als die Absorptionswellenlänge (ebenfalls im UV) von Substanzen wie die in der DE-A 38 14 631 oder die in der EP-A 245 020 beschriebenen Spiro(azaindolino)aryloxazine ist, auch eine größere Migrationsgeschwindigkeit als die im nicht angeregten Zustand bei längeren Wellenlängen (des UV's) absorbierenden Substanzen. Dies führt dazu, daß bei einer Oberflächenfärbung die Substanzen mit der größeren Migrationsgeschwindigkeit tiefer in das Kunststoffmaterial wandern, so daß diese Substanzen aufgrund der Absorption des Kunststoffmaterials bzw. der oberflächennah befindlichen Farbstoffmoleküle im geringeren Umfange angeregt werden, als die an der Oberfläche verbleibenden Farbstoffe. Dem kann zwar dadurch "entgegen gewirkt" werden, daß die Konzentration der Farbstoffe mit größerer Migrationsgeschwindigkeit im Vergleich zu der Konzentration der Farbstoffe mit kleinerer Migrationsgeschwindigkeit erhöht wird, hierdurch wird aber bei gleichzeitiger Einfärbung mit allen Farbstoffen die Zahl der im oberflächennahen Bereich verfügbaren Plätze im Kunststoffmaterial für die Farbstoffe mit geringerer Migrationsgeschwindigkeit verringert. Dies hat zur Folge, daß die Farbtiefe merklich abnimmt.

Dieses Problem kann nur scheinbar dadurch gelöst werden, daß die Farbstoffe nacheinander eingebracht werden, wobei zuerst die Farbstoffe mit der geringeren Migrationsgeschwindigkeit und dann die Farbstoffe mit der größeren Migrationsgeschwindigkeit eingebracht werden. Aufgrund des Einbringens der Farbstoffe in mehreren aufeinanderfolgenden Arbeitsgängen treten nämlich durch Rückdiffusion neue Probleme auf; zudem wird die Herstellung beträchtlich verteuert.

Weiterhin ist zu berücksichtigen, daß es zur Erzielung einer neutral grauen oder braunen Farbe und der hierfür erforderlichen "gleichmäßigen weichen" Absorption im sichtbaren Spektralbereich häufig nicht ausreicht, das Brillenglas mit nur zwei Farbstoffen einzufärben, die unterschiedlichen Klassen angehören. In der Praxis ist es vielmehr erforderlich, eine Vielzahl unterschiedlicher Farbstoffe, beispielsweise 5, 6 oder 7 unterschiedlicher Farbstoffe, die den unterschiedlichsten Klassen angehören, zu verwenden.

Nun könnte man auf den Gedanken kommen, die Farbstoffe unterschiedlicher Klassen so zu synthetisieren, daß ihre Migrationsgeschwindigkeit in der jeweiligen Kunststoffmatrix in etwa gleich ist. Dies ist jedoch aus einer Reihe von Gründen nicht möglich:
Entscheidend für die Migrationsgeschwindigkeit ist nicht so sehr die Molekülgröße, sondern vielmehr die "Affinität" des Farbstoffes zur umgebenden Kunststoffmatrix. Polare Gruppen oder Atome in "exponierter Lage" im Gesamtfarbstoffmolekül binden den Farbstoff an polare Gruppen oder Atome im Kunststoffmaterial. Bei hoher Affinität ist die Neigung, die oberflächennahen Bindungsorte im Kunststoff zu verlassen und tiefer in das Material einzudringen gering:
Dies trifft beispielsweise für den polaren Stickstoff des in der US-PS 4 637 698 beschriebenen Chinolinsystems und noch mehr für den des in der EP-A 232 295 beschriebenen Isochinolinssystems oder der in der EP-A 245 020 beschriebenen Azaindolinsysteme zu. Im Gegensatz hierzu haben die in der US-PS 3 567 695 beschriebenen relativ unpolaren Moleküle eine vergleichsweise hohe Migrationsfähigkeit.

Auch eine Substitution dieser Moleküle mit polaren Gruppen, wie Amino-, Hydro- oder Nitro-Gruppen, löst das Problem nicht. Zwar kann hierdurch in aller Regel die Migrationsneigung der substituierten Farbstoffe verringert werden, gleichzeitig werden aber auch die physikalischen Eigenschaften, wie Eindunkelungs- oder Aufhellgeschwindigkeit, Farbe im eingedunkelten Zustand, UV-Absorption, Quantenausbeute und vor allem die Lebensdauer - zumeist im negativen Sinne - geändert.

Aus den vorgenannten Gründen ist es schwierig, transparente Gegenstände und insbesondere Brillengläser mit einer Reihe von Farbstoffen, die unterschiedlichen Klassen angehören, oder Substituenten bzw. Molekülteilbereich unterschiedlicher Polarität aufweisen, homogen von der Oberfläche her einzufärben.

Die durch die unterschiedlichen Migrations-bzw. Diffusionseigenschaften hervorgerufenen Probleme treten - in abgeschwächter Form - auch bei Brillengläsern auf, bei denen die photochrome Einfärbung durch Mischen der Farbstoffe in das Monomer erfolgt. Bei diesen Brillengläsern liegt zwar unmittelbar nach der Herstellung eine homogene Verteilung der einzelnen Farbstoffe im Brillenglas vor, so daß das Brillenglas homogen eingefärbt ist. Bei nachfolgenden Beschichtungsvorgängen ist es jedoch erforderlich, das Brillenglas auf vergleichsweise hohe Temperaturen zu erwärmen. Hierbei können Farbstoffe mit hoher Migration aus der oberflächennahen Schicht, die im wesentlichen das Absorptionsverhalten bestimmt, austreten, so daß sich das Mischungsverhältnis der einzelnen Farbstoffe - gegebenenfalls lokal unterschiedlich - ändern kann.

Der Erfindung liegt die Aufgabe zugrunde, photochrome Farbstoffe anzugeben, die einerseits in unterschiedlichen Spektralbereichen absorbieren und die andererseits gleiche Migrations- bzw. Diffusionseigenschaften in der Kunststoffmatrix des eingefärbten Gegenstands haben.

Eine erfindungsgemäße Lösung dieser Aufgabe ist im Patentanspruch 1 angegeben. Weiterbildungen der Erfindung sind Gegenstand der Unteransprüche.

Die Erfindung geht von der Erkenntnis aus, daß es praktisch unmöglich ist, einzelne photochrome Farbstoffe, die angeregt in verschiedenen Spektralbereichen des sichtbaren Licht absorbieren und damit verschiedene Substituenten aufweisen bzw. unterschiedlichen Farbstoffklassen angehören, so zu synthetisieren, daß sie in einer Kunststoffmatrix gleiche Migrationseigenschaften bzw. Diffusionsgeschwindigkeiten besitzen. Erfindungsgemäße ist erkannt worden, daß die gestellte Aufgabe deshalb nur dann gelöst werden kann, wenn die unterschiedlichen Farbstoffe nicht getrennt, sondern verbunden zu einem Molekül in das Kunststoffmaterial eingebracht sind, da ein einziges Molekül naturgemäß auch nur eine Migrations- bzw. Diffusionsgeschwindigkeit hat.

Die Erfindung geht dabei von der weiteren Erkenntnis aus, daß es möglich ist, im Prinzip bereits bekannte Farbstoffe bzw. Farbstoffe, die bekannten Farbstoffklassen angehören, so miteinander chemisch zu verbinden, daß sich ihre physikalischen und chemischen Grundeigenschaften, wie Farbe, Quantenausbeute, Eindunkelungs- und Aufhellgeschwindigkeit und Temperaturabhängigkeit der photochromen Reaktion sowie Lebensdauer kaum ändern. Bei geeigneter Wahl der Verbindung bleiben die Eigenschaften der einzelnen Farbstoffmoleküle auch in dem "Gesamtmolekül" erhalten. Die Verbindung ist dabei so zu wählen, daß eine elektronische Entkoppelung der verschiedenen Farbstoffsysteme gewährleistet ist, da hierdurch eine Energieübertragung über Atombrücken im Molekül vermieden wird. Damit können die Eigenschaften der einzelnen in das "Gesamtmolekül" eingebrachten Farbstoffmoleküle lediglich noch durch gegenseitige sterische Behinderung beeinflußt werden, die durch geeignete Wahl der Verbrückung minimiert werden kann.

Bisher ist nichts über miteinander verbundene, aber voneinander unabhängige reagierende photochrome Systeme bekannt.

Die in der JP-A 02 80490 beschriebene Esterverknüpfung zweier Spiro(indolino)naphthoxazine mittels Terephthalsäuredichlorid erhält die beiden Teilchromophore in enger elektronischer und sterischer Verbindung. Hier werden zudem - mit einer sehr basenlabilen - Brücke nur gleichartige Reste verknüpft. Die Möglichkeit einer breiteren Absorption auf diesem Wege ist nicht einmal angedeutet. Gleiches gilt für die in der JP-A 03 99083 beschriebene Alkylenbrücke zwischen den Stickstoffatomen zweier Spiro(indolino)pyridobenzoxazine. Wie bei der JP-A 03 11081, die über Urethanbindung mit dem photochromen Molekül verknüpfte Allylester beschreibt, ist hierbei der Grundgedanke die chemische Anbindung des photochromen Farbstoffs an das Polymer in der Polymerreaktion. Gleiches gilt für die in der JP 05 70468 und von T. Kakishita u.a. (Kobunshi Ronbunshu 1994, S. 59-67) beschriebenen Acrylate und Methacrylate von Spiro(indolino bzw. selenazolo)naphthoxazinen.

Geeignete Verbindungsbrücken zwischen den verschiedenen Farbstoffmolekülen sind nachstehend angegeben.

Als Verknüpfungsstelle an den Farbmolekülen ist prinzipiell jede Stelle geeignet. Erfindungsgemäß ist aber erkannt worden, daß - außer in Sonderfällen, auf die noch gesondert eingegangen wird - Stellen gewählt werden sollten, die möglichst weit vom Reaktionszentrum, dem Spirozentrum, entfernt sind um die Beeinflussung möglichst gering zu halten. So führt beispielsweise eine Vernetzung über die Stickstoffatome des Indolins in den entsprechenden Pyranen und Oxazinen immer zu Verbindungen, die gegenüber den entsprechenden Methylhomologen eine stärkere Vorfärbung, d.h. eine stärkere Neigung zur Beibehaltung der offenen Struktur, zeigen.

Lange Alkanketten - im Prinzip eine gute Brücke - sollten daher nicht miteinander verknüpft werden, wenn sie sich wie in der JP-A 03 51841 am Indolinstickstoff befinden.

Mögliche Beispiele sind dabei:
a) linear verknüpfte photochrome Systeme:

   Y-B-Y Y-B-Y' Y-B-Y'-B-Y Y-B-Y'-B-Y"
b) verzweigt verknüpfte photochrome Systeme mit der Verzweigungsstelle in einem Brückenglied: 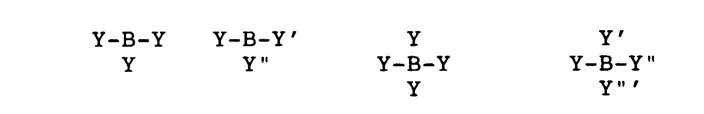 bzw. in einem photochromen Teilsystem: 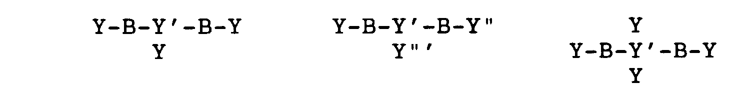
Hierbei stellen Y und Y' die photochromen Teilsysteme und B die - nicht notwendigerweise identischen - Brückenglieder dar.

Durch Kombination der vorgenannten Grundmuster können selbstverständlich auch mehr als vier photochrome Farbstoffe miteinander verbunden werden.

Aufgrund der vergleichsweise schmalbandigen Absorption der photochromen Farbstoffe im sichtbaren Spektralbereich werden zur Erzielung eines neutralen grauen oder braunen Farbtons immer mindestens zwei, meist jedoch vier oder mehr unterschiedliche Farbstoffe benötigt. Die für braune Farbtöne notwendige stärkere Absorption im kurzwelligen Bereich (400-500 nm) wird beispielsweise dadurch erreicht, daß zwei gelbe, ein oranger, ein violetter und ein blauer photochromer Farbstoff miteinander gekoppelt werden.

Die Erfindung wird nachstehend ohne Beschränkung des allgemeinen Erfindungsgedankens anhand von Ausführungsbeispielen exemplarisch beschrieben, auf die im übrigen bezüglich der Offenbarung aller im Text nicht näher erläuterten erfindungsgemäßen Einzelheiten ausdrücklich verwiesen wird.

Darstellung von linear verknüpften photochromen Farbstoffen:
In einem ersten Schritt wird bevorzugt ein Keton hergestellt, das bereits die spätere Verbindungsbrücke zwischen den photochromen Farbstoffen aufweist. In den weiteren Syntheseschritten werden die Farbstoffe erfindungsgemäß an den Verknüpfungsstellen der Verbindungsbrücke aufgebaut, wobei durch geeignete Wahl der eingesetzten Verbindungen und deren Mengenverhältnis sowohl symmetrische als auch unsymmetrische photochrome Farbstoffe erhalten werden.

Zu 181,4 g (1,36 mol) wasserfreiem AlCl₃ in 400 ml 1,2-Dichlorethan gibt man unter Rühren bei Raumtemperatur 168,8 g (1,20 mol) Benzoylchlorid. Die Suspension färbt sich unter Auflösung des Aluminiumsalzes dunkler. Unter schwacher Kühlung gibt man bei < 20°C 100 g (0,56 mol) 1,2-Diphenylethan zu. Die dunkelbraune Lösung wird noch 1 h gerührt und über Nacht stehen gelassen. Man gießt die Reaktionsmasse vorsichtig auf 400 g Eis und säuert mit HCl an. Die organische Phase wird abgetrennt, mit 2%iger NaOH ausgeschüttelt und mit Natriumsulfat getrocknet. Nach dem Filtrieren wird das Dichlorethan abgezogen. Man erhält 160,1 g eines orangen Öls, das neben etwas Ausgangsprodukt zu 82 % aus 1,2-Di(4-benzophenonyl)-ethan und 14 % aus 4-Phenethyl-benzophenon besteht.

160 g der erhaltenen Mischung werden in 350 ml getrocknetem Dimethylsulfoxid unter Rühren gelöst und 78 g Lithiumacetylid-ethylendiaminkomplex langsam zugegeben. Die dunkelbraune Lösung wird 62 h bei Raumtemperatur gerührt, wobei sie sich nach tiefrot verfärbt. Sie wird vorsichtig auf 800 g Eis gegeben und sofort mit 2n HCl angesäuert. Die Reaktionsmasse wird im Flüssig-flüssig-extraktor mit Ether extrahiert bis die überstehende Etherphase völlig farblos ist. Nach dem Trocknen des Ethers mit Natriumsulfat wird filtriert, dem Filtrat der Ether entzogen. Zurück bleiben 171,4 g eines orangen Öls, das sich nach längerem Stehenlassen zu einer gelben Kristallmasse verfestigt. Diese besteht zu 74 % aus 4,4'-Di(1-Hydroxy-l-phenyl-prop-3-in-1-yl)dibenzyl und zu 13 % aus 3-Phenyl-3-(4-Phenethyl)phenyl-prop-1-in-3-ol.

109 g dieser Kristallmasse werden in 500 ml Toluol gelöst und 36,6 g 6-Methoxy-2-naphthol, sowie 36,6 g 7-Methoxy-2-naphthol zugegeben. Die dunkelgelbe Lösung wird unter Rühren auf 60°C erhitzt, nach Zugabe von einer Spatelspitze 4-Toluolsulfonsäure wird sie schnell dunkler. Die Papierprobe unter UV-Licht ergibt sofort orange Photochromie. Die Lösung wird noch 1 h bei 60°C gerührt. Nach dem Abziehen des Toluols wird das zurückbleibende grüne Öl in Ethanol aufgenommen, kurz aufgekocht und über Nacht stehen gelassen. Nach der Abtrennung des Unlöslichen wird das Ethanol abgezogen. Der Rückstand enthält neun gelborange photochrome Farbstoffe, von denen drei die gewünschte Struktur mit einer linearen Verbindung zwischen zwei photochromen Farbstoffen aufweisen. Zur Isolierung dieser Stoffe wird die Mischung über Aluminiumoxid mit Methylenchlorid chromatographiert. Die fünf in der ersten Fraktion befindlichen photochromen Farbstoffe werden aufgefangen. Die restlichen vier photochromen Farbstoffe verbleiben aufgrund ihrer Polarität am Auftragepunkt. Nach dem Abziehen des Lösemittels verbleiben 66 g eines orangen Öls. Dieses kristallisiert nach einigen Tagen zu einer gelben kristallinen Masse aus. Durch fraktionierte Kristallisation (Lösen der Kristalle in Diethylether und teilweise Ausfällung mit Ethanol; Vorgang mehrfach wiederholen) lassen sich die beiden photochromen Farbstoffe, die nur ein Farbstoffmolekül und die Verbindungsbrücke aufweisen, von den drei gewünschten photochromen Farbstoffen abtrennen. Von diesen enthalten die beiden symmetrischen Produkte jeweils zwei gleiche photochrome Farbstoffmoleküle, die über eine CH₂-CH₂-Brücke miteinander verknüpft sind, das unsymmetrische Produkt enthält die CH₂-CH₂-Brücke und zwei unterschiedliche photochrome Farbstoffmoleküle, die denen der symmetrischen Produkte entsprechen.

Die erhaltenen erfindungsgemäßen Farbstoffe haben nach NMR-Analyse folgende Struktur:

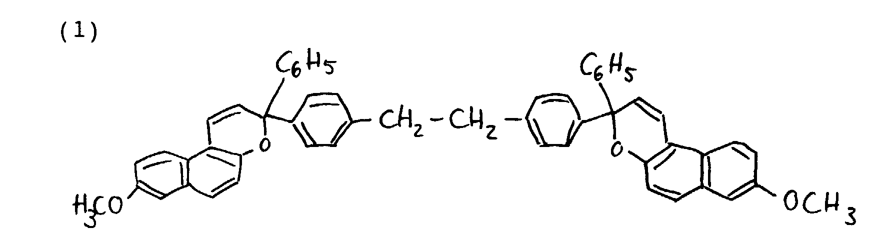

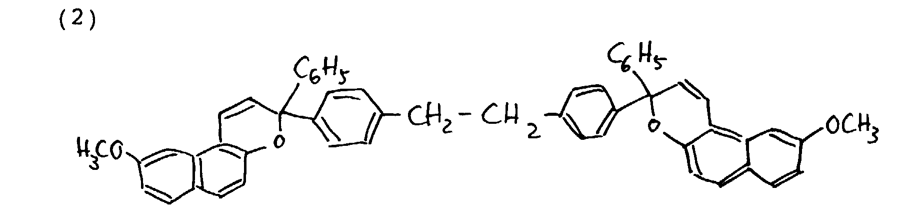

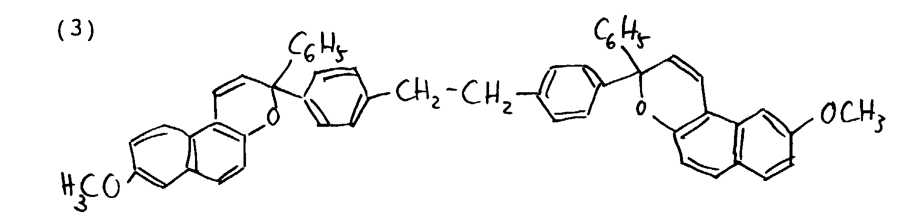

Die photochromen Farbstoffe weisen im angeregten Zustand folgende Absorptionsmaxima auf:
(1) λₘₐₓ ca. 495 nm ; orangegelb
(2) λₘₐₓ ca. 435 nm ; hellgelb
(3) λₘₐₓ ca. 490 nm ; goldgelb
   Werden statt der 36,6 g 6-Methoxy-2-naphthol und 36,6 g 7-Methoxy-2-naphthol 145 g 1,3,3-Trimethyl-8'-hydroxy-spiroindolino-naphth[2,1-b]oxazin eingesetzt, so erhält man unter gleichen Reaktionsbedingungen nach der chromatographischen Trennung an Aluminiumoxid mit Methylenchlorid einen linear verknüpften, symmetrischen photochromen Farbstoff mit folgenden Eigenschaften:

### Struktur:

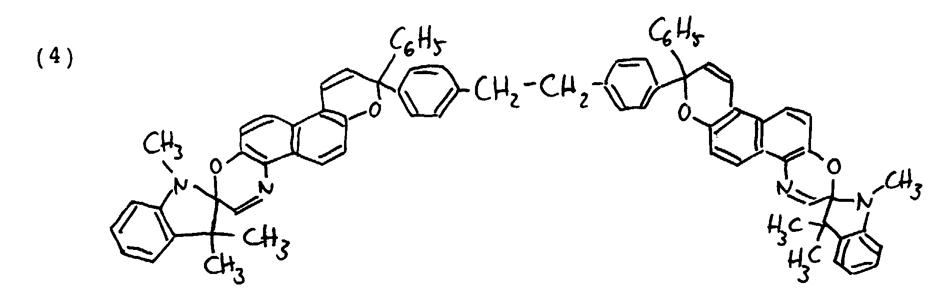

Absorptionsmaximum im angeregten Zustand:
(4) λₘₐₓ ca. 600 nm ; grünblau
   Für die Herstellung des hier eingesetzten Ausgangsprodukts 1,3,3-Trimethyl-8'-hydroxy-spiroindolino-naphth-[2,1-b]oxazin wird auf die EP-A 0 146 135 verwiesen, auf die im übrigen bezüglich aller in der vorliegenden Anmeldung nicht im einzelnen beschriebenen Syntheseschritte ausdrücklich Bezug genommen wird. Führt man oben beschriebene Synthese mit 36,6 g 6-Methoxy-2-naphthol und 72,5 g 1,3,3-Trimethyl-8'-hydroxy-spiroindolino-naphth[2,1-b]oxazin mit folgender Strukturformel: 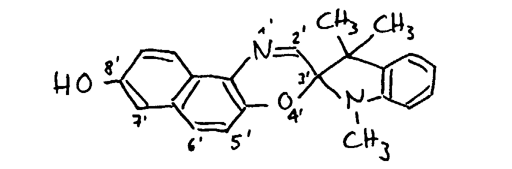 unter gleichen Bedingungen durch und trennt die drei bei der Säulenchromatographie an Aluminiumoxid mit Methylenchlorid in der ersten Fraktion enthaltenen Farbstoffe durch fraktionierte Kristallisation, so erhält man Farbstoff (1), Farbstoff (4) und: 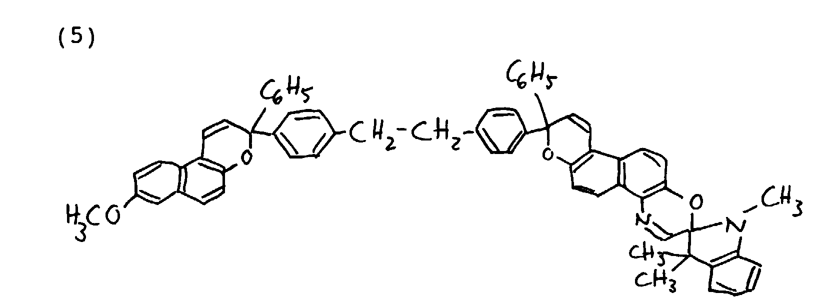 Absorptionsmaximum im angeregten Zustand:
(5) λₘₐₓ ca. 490 nm ;
   für das photochrome Zentrum des Diaryl-2H-naphthopyranteils des Farbstoffs;
   λₘₐₓ ca. 615 nm ;
   für das photochrome Zentrum des Indolinospirooxazinteils des Farbstoffs;
   resultierende Einfärbung im angeregten Zustand: grüngrau
Wird in der beschriebenen Synthese statt der 36,6 g 7-Methoxy-2-naphthol 33,6 g 1,5-Dihydroxynaphthalin verwendet, so erhält man nach der Abtrennung der Nebenprodukte mittels Säulenchromatographie an Aluminiumoxid mit Methylenchlorid in der ersten Fraktion den photochromen Farbstoff (1), in der zweiten Fraktion einen photochromen Farbstoff mit linearer Verknüpfung, der drei photochrome Farbstoffmoleküle aufweist, die über zwei CH₂-CH₂-Brücken nach dem Verknüpfungsschema Y-B-Y'-B-Y miteinander verbunden sind.

Dieser Farbstoff hat folgende Struktur und Eigenschaften: 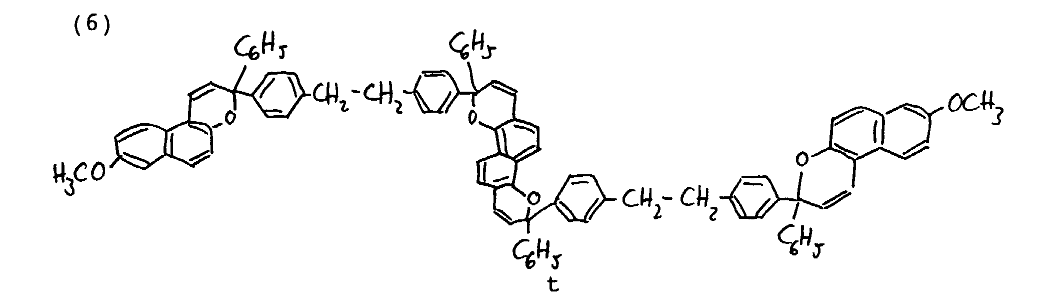 λₘₐₓ ca. 520 nm ; orangerot

Darstellung von verzweigt verknüpften photochromen Farbstoffen:

Es werden die gleichen Ausgangsstoffe und die gleichen Reaktionsbedingungen wie für die Herstellung der linear verknüpften photochromen Farbstoffe gewählt. Das dort verwendete 1,2-Diphenylethan wird durch 110 g (0,28 mol) 1,4-Diphenyl-2,3-dibenzyl-but-2-en ersetzt. Nach Durchführung der entsprechenden Schritte erhält man 165 g eines orangen Öls, das neben etwas Ausgangsprodukt hauptsächlich: 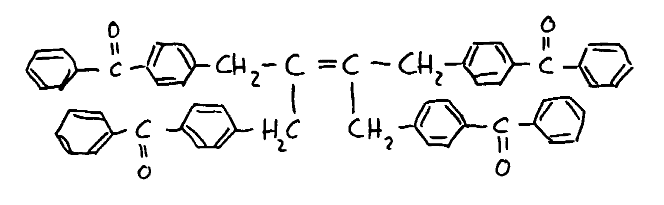 enthält.

160 g dieses Öls werden in 350 ml getrocknetem Dimethylsulfoxid unter Rühren gelöst. Anschließend werden 78 g Lithiumacetylid-ethylendiaminkomplex langsam zugegeben. Während des 62-stündigen Rührens bei Raumtemperatur verfärbt sich die dunkelbraune Lösung nach tiefrot. Dann wird sie vorsichtig auf 800 g Eis gegossen und sofort mit 2n HCl angesäuert. Das Reaktionsprodukt wird im Flüssig-flüssig-extraktor mit Ether extrahiert. Wenn die überstehende Etherphase völlig farblos ist, wird der Ether mit Natriumsulfat getrocknet und filtriert. Nach dem Abzug des Ethers aus dem Filtrat bleiben 170 g eines orangen Öls zurück, das sich nach längerem Stehenlassen zu einer gelben Kristallmasse verfestigt.

110 g dieser Kristallmasse werden in 500 ml Toluol gelöst und 73,2 g 6-Methoxy-2-naphthol zugegeben. Die dunkelgelbe Lösung wird unter Rühren auf 60°C erhitzt, nach Zugabe von einer Spatelspitze 4-Toluolsulfonsäure wird sie schnell dunkler. Die Lösung wird noch 1 h bei 60°C gerührt. Nach dem Abziehen des Toluols wird das zurückbleibende grüne Öl in Ethanol aufgenommen, kurz aufgekocht und über Nacht stehen gelassen. Das Unlösliche wird abgetrennt, danach das Ethanol abgezogen und der Rückstand über Aluminiumoxid mit Methylenchlorid chromatographiert. Die erste Fraktion wird aufgefangen. Nach Abzug des Lösemittels verbleiben 60 g eines orangen Öls. Dieses kristallisiert nach einigen Tagen zu einer gelben kristallinen Masse aus. Durch fraktionierte Kristallisation (Lösen der Kristalle in Diethylether und teilweise Ausfällung mit Ethanol; Vorgang mehrfach wiederholen) erhält man den erfindungsgemäßen photochromen Farbstoff, der vier Farbstoffmoleküle aufweist, die über eine verzweigte Brücke miteinander verknüpft sind.

Die Ausgangsverbindung, das 1,4-Diphenyl-2,3-dibenzyl-but-2-en erhält man durch die Umsetzung von 84 g (0,4 Mol) Dibenzylketon mit 182 g Triphenylphosphin-1,3-diphenylpropyliden unter milden Bedingungen in Dichlorethan.

Das Ylid kann durch Zugabe von Natriumethanolat zu einer Mischung von 124 g 1,3-Diphenyl-2-brompropan und 118 g Triphenylphosphin in Dimethylformamid hergestellt werden.

Entsprechend zur oben beschriebenen Synthese können auch hier die unsymmetrischen Produkte, die eine verzweigte Brücke mit vier Verknüpfungsstellen und bis zu vier verschiedene photochrome Farbstoffmoleküle aufweisen, durch Einsatz von verschiedenen Naphtholen erhalten werden.

Durch den Einsatz von (substituiertem) Naphthol und Dihydroxynaphthalin bei der Synthese in unterschiedlichen Konzentrationen erhält man eine verzweigte Brücke mit zusätzlich linear verknüpften Brückengliedern. Die Anzahl linear verknüpfter Brückenglieder ist umso größer, je größer das Verhältnis von eingesetztem Dihydroxynaphthalin zu eingesetztem (substituiertem) Naphthol ist.

Zur Synthese von verzweigt verknüpften photochromen Farbstoffen mit längeren Brückengliedern wird beispielsweise 1,5-Diphenylpentan-2-on mit Titan(III)-chlorid und Lithiumaluminiumhydrid umgesetzt. Man erhält in diesem Fall 1,6-Diphenyl-3,4-di(2-phenylethyl)-hex-3-en als Brückenverbindung, die anstelle von 1,4-Diphenyl-2,3-dibenzyl-but-2-en analog der obigen Vorschrift verwendet wird.

Für die Herstellung von verzweigt verknüpften photochromen Farbstoffen mit drei über eine Brücke verbundenen Farbstoffmolekülen setzt man 1,3-Diphenyl-2-propanon mit Toluylmagnesiumbromid nach Grignard um. Durch Hydrolyse erhält man einen tert. Alkohol, dessen Reduktion zu 1,3-Diphenyl-2-benzylpropan führt.

Die Umsetzung dieser Verbindung in Analogie zu vorbeschriebenen Syntheseschritten führt zu verzweigt verknüpften photochromen Farbstoffen, die in Abhängigkeit von den eingesetzten (substituierten) Naphtholen drei gleiche, zwei gleiche und ein abweichendes oder drei verschiedene Farbstoffmoleküle folgender Struktur aufweisen: 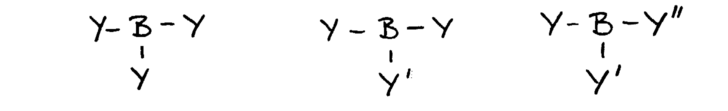 Die Verlängerung der Brückenglieder durch weitere lineare Verknüpfung der Farbstoffmoleküle ist durch Einsatz einer Dihydroxyverbindung, wie beispielsweise Dihydroxynaphthalin anstelle des oder der Naphthole zugänglich. Je größer das Verhältnis der eingesetzten Menge der Dihydroxyverbindung zu der eingesetzten Menge an Naphthol ist, desto großer ist die Anzahl der linear weiter verknüpften Farbstoffmoleküle.

Alle weiteren beanspruchten Verknüpfungsmöglichkeiten sind in analoger Weise aus den jeweiligen Ausgangsverbindungen zu erhalten.

## Patentansprüche

1. Photochromer Farbstoff, der im angeregten Zustand im sichtbaren Bereich absorbiert, und der in und/oder auf einen Gegenstand aus einem Kunststoffmaterial zu dessen photochromer Einfärbung ein- bzw. aufbringbar ist,
dadurch **gekennzeichnet**, daß wenigstens zwei Moleküle, von denen jedes photochrome Eigenschaften aufweist, und die im angeregten Zustand spektral unterschiedlich absorbieren, über eine Bindung, die die photochromen Eigenschaften der einzelnen (Teil-)Moleküle praktisch nicht beeinflußt, zu einem Molekül miteinander verknüpft sind.

2. Farbstoff nach Anspruch 1,
dadurch **gekennzeichnet**, daß die Bindung die einzelnen Teil-Moleküle elektronisch entkoppelt.

3. Farbstoff nach Anspruch 1 oder 2,
dadurch **gekennzeichnet**, daß die Verknüpfung linear erfolgt.

4. Farbstoff nach Anspruch 1 oder 2,
dadurch **gekennzeichnet**, daß die Verknüpfung verzweigt erfolgt.

5. Farbstoff nach Anspruch 4,
dadurch **gekennzeichnet**, daß die Verknüpfungsstelle in einem Brückenglied oder in einem photochromen Teilsystem liegt.

6. Farbstoff nach einem der Ansprüche 1 bis 5,
dadurch **gekennzeichnet,** daß die Verknüpfungsstelle von dem Spirozentrum der Farbstoffe beabstandet ist.

## Claims

1. Photochromic colouring agent, which in the excited state absorbs in the visible range and which may be introduced into and/or applied to an object made of a synthetic material to colour it photochromically, characterised in that at least two molecules, each of which has photochromic properties and which in the excited state absorb different parts of the spectrum, are linked to one another to form one molecule, via a bond which practically does not affect the photochromic properties of the individual (partial) molecules.

2. Colouring agent according to claim 1,
characterised in thatthe bond electronically decouples the individual partial molecules.

3. Colouring agent according to claim 1 or 2,
characterised in that the linkage is linear.

4. Colouring agent according to claim 1 or 2
characterised in that the linkage is branched.

5. Colouring agent according to claim 4,
characterised in that the linkage point lies in a bridge member or in a photochromic partial system.

6. Colouring agent according to one of claims 1 to 5,
characterised in that the linkage point is at a distance from the spiro centre of the colouring agents.

## Revendications

1. Colorant photochromique, qui absorbe à l'état excité dans la région visible et qui peut être introduit ou appliqué dans et/ou sur un objet en une matière synthétique pour la coloration photochromique de cet objet,
caractérisé en ce qu'au moins deux molécules, dont chacune possède des propriétés photochromiques, et qui ont à l'état excité des spectres d'absorption différents, sont jointes l'une à l'autre en une seule et même molécule par l'intermédiaire d'une liaison qui n'exerce pratiquement pas d'influence sur les propriétés photochromiques des molécules (partielles) individuelles.

2. Colorant suivant la revendication 1, caractérisé en ce que la liaison désapparie électroniquement les molécules partielles individuelles.

3. Colorant suivant la revendication 1 ou 2, caractérisé en ce que la jonction est effectuée selon un mode linéaire.

4. Colorant suivant la revendication 1 ou 2, caractérisé en ce que la jonction est effectuée selon un mode ramifié.

5. Colorant suivant la revendication 4, caractérisé en ce que le site de jonction se trouve dans un élément de pontage ou dans un système partiel photochromique.

6. Colorant suivant l'une des revendications 1 à 5, caractérisé en ce que le site de jonction se trouve à distance du centre spiro des colorants.
